(19) Europäisches Patentamt
European Patent Office
Office européen des brevets

(11) EP 4 766 013 A2

(12) EUROPEAN PATENT APPLICATION

(43) Date of publication:
24.06.2026 Bulletin 2026/26

(21) Application number: 26168268.6

(22) Date of filing: 06.08.2021

(51) International Patent Classification (IPC):
H04W 92/18 (2009.01)

(52) Cooperative Patent Classification (CPC):
H04W 74/0808; H04W 76/28; H04W 92/18;
Y02D 30/70

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.08.2020 CN 202010791656

(62) Document number(s) of the earlier application(s) in
accordance with Art. 76 EPC:
21852839.6 / 4 195 746

(71) Applicant: Vivo Mobile Communication Co., Ltd.
Dongguan, Guangdong 523863 (CN)

(72) Inventors:
• PENG, Shuyan
Dongguan, Guangdong, 523863 (CN)
• JI, Zichao
Dongguan, Guangdong, 523863 (CN)

(74) Representative: Winter, Brandl - Partnerschaft
mbB
Alois-Steinecker-Straße 22
85354 Freising (DE)

Remarks:
This application was filed on 26-03-2027 as a
divisional application to the application mentioned
under INID code 62.

(54) METHOD AND APPARATUS FOR OBTAINING SENSING WINDOW, AND TERMINAL

(57) This application discloses a method and an apparatus for obtaining a sensing window, and a terminal. The method includes at least one of the following: obtaining a first resource sensing window according to at least one step size P in time; or obtaining a second resource sensing window according to a resource selection window.

FIG. 1

## Description

## TECHNICAL FIELD

This application belongs to the field of communications technologies, and specifically relates to a method and an apparatus for obtaining a sensing window, and a terminal.

## BACKGROUND

A long term evolution (Long Term Evolution, LTE) system supports sidelink (sidelink) transmission, that is, data transmission directly performed between terminals (also known as User Equipment (UE)) on a physical layer. An LTE sidelink communicates based on broadcast. Although the LTE sidelink can be used for supporting basic security communication of vehicle to everything (vehicle to everything, V2X), it is not suitable for other more advanced V2X services. A 5G new radio (New Radio, NR) system supports more advanced sidelink transmission designs, such as unicast, multicast, groupcast, and the like, so as to support a more comprehensive service type.

In LTE, partial sensing is mainly designed to save power, and to support communication between a pedestrian and a vehicle (Pedestrian to Vehicle, P2V). The terminal supports two modes of resource selection methods. In one method, resource selection is random. In another method, partial sensing is firstly performed, a resource is selected based on a result of the partial sensing, and semi-static resource reservation is performed. Which mode of resource selection methods is selected by the terminal is configured by radio resource control (Radio Resource Control, RRC). When the RRC is configured to support two modes of resource selection, the terminal decides which mode of resource selection is used.

In a process of implementing this application, the inventor finds that there are at least the following problems in the prior art:

In the LTE sidelink, a step size in time of partial sensing in a sidelink resource pool is fixed at 100 ms. For periodicity configuration in the LTE, a sensing window obtained by k*100 ms can basically sense a resource reservation condition of other UE in the resource pool. However, in NR, an optional value of a sensing periodicity is irregular. If the sensing window is obtained in a step size in time of 100 ms, resource reservation conditions of other terminals (for example, a terminal whose reservation periodicity value is [1:99]) in a selection window cannot be sensed, resulting in collision between a selected resource and a resource reserved by another terminal when the sensing terminal selects resources.

## SUMMARY

A purpose of embodiments of this application is to provide a method and an apparatus for obtaining a sensing window, and a terminal, which can solve a problem that a method for obtaining a sensing window in the prior art is not applicable to a 5G or a subsequent communication system.

To resolve the foregoing technical problems, this application is implemented as follows:

According to a first aspect, the embodiments of this application provide a method for obtaining a sensing window, applied to a terminal, the method including at least one of the following:

obtaining a first resource sensing window according to at least one step size P in time; or
obtaining a second resource sensing window according to a resource selection window.

According to a second aspect, the embodiments of this application provide an apparatus for obtaining a sensing window, applied to a terminal, the apparatus including at least one of the following:

a first obtaining module, configured to obtain a first resource sensing window according to at least one step size P in time; or
a second obtaining module, configured to obtain a second resource sensing window according to a resource selection window.

According to a third aspect, a terminal is provided, the terminal including a processor, a memory, and a program or an instruction stored on the memory and executable on the processor, the program or instruction, when executed by the processor, implementing steps of the method according to the first aspect.

According to a fourth aspect, a readable storage medium is provided, storing a program or an instruction, the program or instruction, when executed by a processor, implementing steps of the method according to the first aspect.

According to a fifth aspect, a chip is provided, including a processor and a communication interface, the communication interface being coupled to the processor, and the processor being configured to run a program or an instruction of a network side device to implement the method according to the first aspect.

In the embodiments of this application, a first resource sensing window is obtained through at least one step size P in time, and/or a second resource sensing window is obtained according to a resource selection window, so that a purpose of balancing power consumption and sensing performance can be achieved.

## BRIEF DESCRIPTION OF THE DRAWINGS

FIG. 1 is a flowchart of steps of a method for obtaining a sensing window according to an embodiment of this application.

FIG. 2 is a schematic diagram of parameters related to resource sensing and resource selection in the method for obtaining a sensing window according to an embodiment of this application.

FIG. 3 is a schematic structural diagram of an apparatus for obtaining a sensing window according to an embodiment of this application.

FIG. 4 is a first schematic structural diagram of a terminal according to an embodiment of this application.

FIG. 5 is a second schematic structural diagram of a terminal according to an embodiment of this application.

## DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms such as "first" and "second" in the specification and the claims of this application are intended to distinguish between similar objects, but are not used for describing a specific sequence or a chronological order. It is to be understood that the data used in such a way is interchangeable in proper circumstances, so that the embodiments of this application can be implemented in other sequences than the sequence illustrated or described herein. In addition, objects distinguished by "first", "second", and the like are usually of one type, and a quantity of the objects is not limited. For example, a first object may be one or more than one. In addition, "and/or" in the specification and claims represents at least one of connected objects. The character "/" generally indicates an "or" relationship between the associated objects.

It is worth noting that technologies described in the embodiments of this application are not limited to a long term evolution (Long Term Evolution, LTE)/LTE-advanced (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technologies may be used for not only the foregoing systems and radio technologies, but also other systems and radio technologies. However, the following description describes a new radio (New Radio, NR) system for a purpose of example, and an NR term is used in many parts of the following description. These technologies are also applicable to an application other than an NR system application, such as a 6$^{th}$ generation (6$^{th}$ Generation, 6G) communication system.

In the embodiments of this application, a terminal may also be referred to as a terminal device or user equipment (User Equipment, UE). The terminal may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), pedestrian user equipment (PUE), and the like. The wearable device includes: a bracelet, a headphone, glasses, and the like. It needs to be noted that, the embodiments of this application do not limit a specific type of the terminal.

The following describes the method and apparatus for obtaining a sensing window, and the terminal provided in the embodiments of this application in detail through specific embodiments and application scenarios thereof with reference to the accompanying drawings.

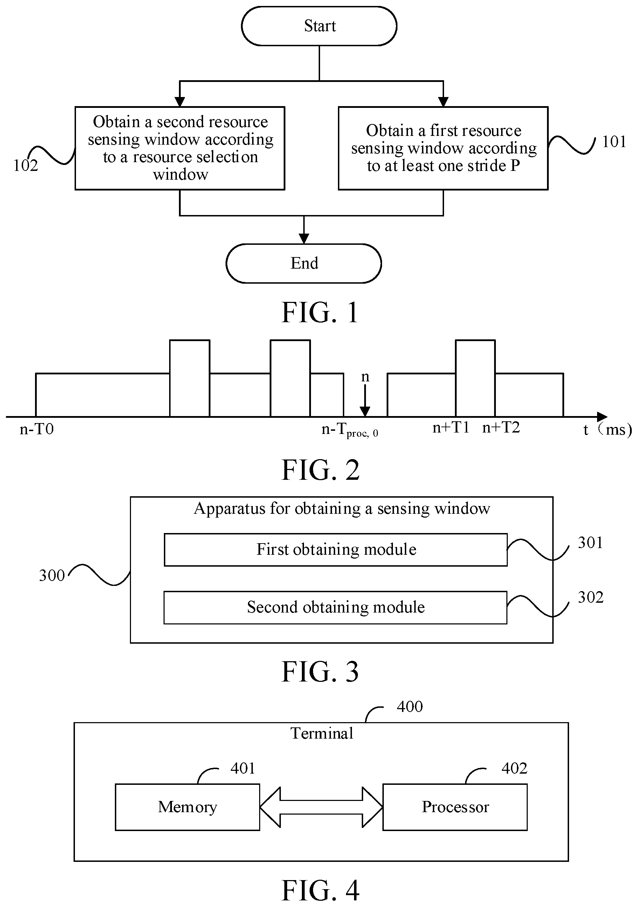

As shown in FIG. 1, the embodiments of this application further provide a method for obtaining a sensing window, applied to a terminal, the method including at least one of the following:

Step 101. Obtain a first resource sensing window according to at least one step size P in time.
Step 102. Obtain a second resource sensing window according to a resource selection window.

The first resource sensing window may be one or more windows, and the second resource sensing window may also be one or more windows. Optionally, step 101 is specifically: obtaining the first resource sensing window according to the at least one step size P in time and a resource selection window.

As an optional embodiment, in a case that a first condition is met, the second resource sensing window is obtained through step 101, otherwise, the first resource sensing window is obtained through step 102, where the first condition includes at least one of the following:

a periodicity value configured by the terminal is less than a first periodicity value threshold;
a periodicity value configured in the resource pool includes one or more non-zero periodicity values less than a second periodicity value threshold;
a periodicity value configured in the resource pool is not enabled; or
a periodicity value configured by the terminal is 0.

It needs to be noted that, in a case that the periodicity value configured in the resource pool is not enabled, another terminal in the resource pool is in aperiodic transmission. The second resource sensing window can be used for sensing according to the resource selection window, and the second resource sensing window may be a dynamic resource selection window. Alternatively, when the periodicity value configured by the terminal is 0, that is, the terminal is in the aperiodic transmission, the second resource sensing window can be used for sensing according to the resource selection window.

At least one of the first periodicity value threshold and the second periodicity value threshold is at least one of the following:

a predefined threshold;
a pre-configured threshold;
a configured threshold; or
a threshold related to the periodicity value configured in the resource pool.

Pre-configuration or configuration may be pre-configured or configured by a network, or may further be pre-configured or configured by a terminal. Alternatively, the first periodicity value threshold and/or the second periodicity value threshold are values indicated by a network or terminal. The configuration may be specifically a high-layer signaling configuration, and indication may be indicated by a network or terminal through physical layer signaling. For example, it may be configured/indicated by RRC signaling, media access control control element (MAC CE) signaling, sidelink control information SCI signaling, PC5-RRC signaling, SCI, feedback information, physical sidelink feedback channel (PSFCH), and the like.

As another optional embodiment, the method further includes at least one of the following:

determining the step size P in time according to a periodicity value configured in a resource pool;
determining the step size P in time according to a periodicity value configured by a terminal;
determining the step size P in time according to a periodicity value of sidelink discontinuous reception DRX; or
determining the step size P in time according to predefinition, or pre-configuration, or configuration. Pre-configuration or configuration may be configured or pre-configured by a network, or may further be pre-configured or configured by a terminal. For example, it may be configured/indicated by RRC signaling, MAC CE signaling, SCI signaling, PC5-RRC signaling, SCI, feedback information, PSFCH, and the like. It needs to be noted that, if the step size P in time is a pre-configured value or a configured value, the pre-configured value or the configured value is a parameter configured in each resource pool. For example, the pre-configured value or the configured value may be a subset of the periodicity value configured in the resource pool.

A value of the step size P in time is less than or equal to a first value, which is beneficial to reduce a quantity of terminal sensing windows and facilitate terminal capability. That is, the step size P in time may be one value or a plurality of values (e.g. P1, P2, ..., Pm). The first value is a predefined value, or a pre-configured value, or a configured value, or a value determined according to a terminal capability, or a value determined according to quality of service.

It needs to be noted that, pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

In a case that the first value is a value determined according to quality of service QoS, the first value may be configured according to each QoS. For example, each QoS level is associated with a corresponding first value, and if service transmission corresponds to one of the QoS, a corresponding first value can be found according to a configuration parameter of the QoS. Likewise, in a case that the first value is a value determined according to a terminal capability, the first value may be configured according to each terminal capability. For example, for first values associated with and corresponding to different terminal capabilities, if a terminal capability of a current terminal is a certain capability, a corresponding first value may be found according to the capability.

Optionally, the first value is a value configured in the resource pool, or a value related to a configuration parameter of the terminal, or a value related to configuration of a logical channel; or the first value is a value related to configuration of a logical channel group. For example, the first value may be configured based on each resource pool. For example, there is one or more parameter configurations of first values ($P_{budget}$) under an IE corresponding to the resource pool.

As another optional embodiment, the determining the step size P in time according to a periodicity value configured in a resource pool includes at least one of the following:

determining the step size P in time according to a least common multiple of some or all the periodicity values configured in the resource pool;

determining the step size P in time according to a greatest common divisor of some or all the periodicity values configured in the resource pool; or

determining the step size P in time corresponding to the periodicity value configured in the resource pool according to a step size value corresponding to a predefined or pre-configured or configured periodicity value range.

Example 1

As shown in Table 1, a step size value corresponding to at least one periodicity value range is predefined or pre-configured or configured, and the step size P in time is obtained according to the periodicity value configured in the resource pool.

Table 1

| Periodi city value | [1:20] | [21:40] | [41:60] | [61:80] | [81:99] | [100:1000] |
|---|---|---|---|---|---|---|
| P | 10 | 30 | 50 | 70 | 90 | 100 |

If a resource pool 1 (RP1) is configured to support periodic reservation and is configured with 12 periodicity values, which are respectively [0, 21, 43, 79, 100, 200, 300, 400, 500, 700, 800, 1000]. According to the periodicity value configured in the resource pool and Table 1, it can be seen that a step size P1 corresponding to a configuration periodicity value 21 is equal to 30; a step size P2 corresponding to a periodicity value 43 is equal to 50; a step size P3 corresponding to a periodicity value 79 is equal to 70; and a step size P4 corresponding to periodicity values 100, 200, 300, 400, 500, 700, 800, 1000 is equal to 100. If a terminal in the resource pool supports partial sensing, the terminal obtains a position of a sensing window by using the step size P1=30, the step size P2=50, the step size P3=70, and the step size P4=100.

As another optional embodiment, if there are M1 periodicity values (non-zero periodicity values) meeting a first rule in the periodicity value configured in the resource pool, where M1 is a predefined or pre-configured or configured value. The determining the step size P in time according to a periodicity value configured in a resource pool includes at least one of the following:

determining that the step size P in time includes 100, where 100 may cover a sensing range of a periodicity value of 100*k, and can reduce a quantity of step sizes P, and k is a positive integer;

determining that the step size P in time includes a greatest common divisor of some or all the periodicity values meeting the first rule, for example, a greatest common divisor of 100*k1, where k1 is a positive integer, and if k1 is even, the step size P in time is at least 200; or

determining that the step size P in time includes a least common multiple of some or all the periodicity values meeting the first rule, for example, a least common multiple of 100*k2, where k2 is a positive integer.

Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The periodicity values meeting the first rule include at least one of the following:

periodicity values corresponding to multiples of 100; or
periodicity values corresponding to multiples of 10.

As another optional embodiment, if there are M2 periodicity values meeting a second rule in the periodicity value configured in the resource pool, where M2 is a predefined or pre-configured or configured value. The determining the step size P in time according to a periodicity value configured in a resource pool includes at least one of the following:

determining that the step size P in time includes a least common multiple of some or all the periodicity values meeting the second rule, for example, if 10, 20, 40, and 80 are configured, the step size P in time is 80;
determining that the step size P in time includes a greatest common divisor of some or all the periodicity values meeting the second rule, for example, if 10, 20, 40, and 80 are configured, the step size P in time is 10;
determining that the step size P in time includes a least common multiple of quantized values of some or all the periodicity values meeting the second rule, for example, a periodicity value configured as 79 is quantized to 80, and then common multiple processing is performed on the periodicity value, and a resource sensing window obtained based on the step size P in time of 80 is considered that part of the resource sensing window can cover the periodicity value of 79; or
determining that the step size P in time includes a greatest common divisor of quantized values of some or all the periodicity values meeting the second rule, for example, a periodicity value configured as 69 is quantized to 70, and then common divisor processing is performed on the periodicity value, and a resource sensing window obtained based on the step size P in time of 70 is considered that part of the resource sensing window can cover the periodicity value of 69.

Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The periodicity values meeting the second rule include at least one of the following:

periodicity values less than 100; or
periodicity values that are not a multiple of 10.

Optionally, in the foregoing embodiments of this application, quantization granularity for some or all the periodicity values is a predefined or pre-configured or configured value. A quantization rule of the quantized values of some or all the periodicity values includes at least one of the following: rounding up; rounding down; rounding; or a predefined or pre-configured or configured rule.

For example, if the quantization granularity is 10 ms and quantization is performed through rounding up, a quantization result is: ceil (period/10), where the ceil is rounded up.

It needs to be noted that, if there is both the periodicity value meeting the first rule and the periodicity value meeting the second rule in the configuration periodicity value of the resource pool, the step size P in time includes at least one of the following:

determining that the step size P in time includes 100;
determining that the step size P in time includes a greatest common divisor of some or all the periodicity values meeting the first rule;
determining that the step size P in time includes a least common multiple of some or all the periodicity values meeting the first rule;
determining that the step size P in time includes a least common multiple of some or all the periodicity values meeting the second rule;
determining that the step size P in time includes a greatest common divisor of some or all the periodicity values meeting the second rule;
determining that the step size P in time includes a least common multiple of quantized values of some or all the periodicity values meeting the second rule; or
determining that the step size P in time includes a greatest common divisor of quantized values of some or all the periodicity values meeting the second rule.

As another optional embodiment, values of the step sizes P are equal to some or all values of non-zero periodicity values in the resource pool. For example, in a case that the values of the step sizes P are equal to all values of non-zero periodicity values in the resource pool, it is equivalent to that all the periodicity values configured in the resource pool are sensed once.

As another optional embodiment, the determining the step size P in time according to a periodicity value configured by a terminal includes:

determining that the step size P in time is equal to the periodicity value configured by the terminal.

Alternatively, the determining the step size P in time according to a periodicity value of sidelink discontinuous reception DRX includes:

determining that the step size P in time is equal to the periodicity value of the sidelink DRX.

As an optional embodiment, in a case that the first resource sensing window is obtained according to at least one step size P in time, the method further includes at least one of the following:

determining a quantity of the first resource sensing windows, where the quantity includes: an optional quantity of the first resource sensing windows, and an actual quantity of the first resource sensing windows; or determining positions of the first resource sensing windows.

As shown in FIG. 2, the optional quantity of the first resource sensing windows is related to at least one of the following parameters:

a predefined or pre-configured or configured quantity, for example, a configured quantity indicated through bitmap, where pre-configuration or configuration may be configured or pre-configured by a network, or may further be pre-configured or configured by a terminal, and configuration specifically refers to high-layer signaling configuration, for example, it may be configured/indicated by RRC signaling, MAC CE signaling, SCI signaling, PC5-RRC signaling, SCI, feedback information, PSFCH, and the like;

a time length T1 between a starting position of the resource selection window and a resource selection trigger moment;

a time length $T1_{min}$ between an optional starting position of the resource selection window and a resource selection trigger moment;

a time length T2 between an ending position of the resource selection window and a resource selection trigger moment n;

a time length $T2_{max}$ between an optional starting position of the resource selection window and a resource selection trigger moment;

a time length T0 between a starting position of an optional resource sensing window and a resource selection trigger moment;

predefined or pre-configured first processing time $T_{proc,0}^{SL}$;

predefined or pre-configured second processing time $T_{proc,1}^{SL}$; or

the step size P in time.

The optional quantity of the first resource sensing windows (optionally, the optional quantity is a maximum quantity of the first resource sensing windows) includes at least one of the following:

$$(T1+T0)/P;$$

$$(T1_{min}+T0)/P;$$

$$(T2+T0)/P;$$

$$(T2_{max}+T0)/P$$

T0/P;

$$(T0-T_{proc,0}^{SL})/P;$$

$$(T0+T_{proc,1}^{SL} - 100)/P;$$

$$(T1+T0-100)/P;$$

$$(T1_{min}+T0-100)/P;$$

$$(T2+T0-100)/P;$$

$$(T2_{max}+T0-100)/P$$

$$(T0-100)/P;$$

$$(T0-T_{proc,0}^{SL} - 100)/P;$$

$$(T0+T_{proc,1}^{SL} - 100)/P;$$

or
a predefined or pre-configured or configured quantity.

For example, the optional quantity of the first resource sensing windows is determined through (T1+T0)/P; or the optional quantity of resource sensing windows is determined through T0/P; or the optional quantity of the first resource sensing windows is determined through $(T0-T_{proc,0}^{SL})/P$; or the optional quantity of the first resource sensing windows is determined through the predefined/pre-configured/configured parameter.

As an optional embodiment, the determining positions of the first resource sensing windows includes: determining the positions of the first resource sensing windows as: some or all positions meeting Y-j*P within a preset range, where Y is a resource in a resource selection window of the terminal, j is a value obtained according to a predefined or pre-configured or configured parameter, and P is the step size. For example, a value of j may be indicated through bitmap. Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.

The preset range includes at least one of the following, as shown in FIG. 2:

a range ([n-T0, n+T1]) between a starting position of an optional resource sensing window and a starting position of the resource selection window;
a range ([n-T0+100, n+T1]) starting backward at a preset time from a starting position of an optional resource sensing window to a starting position of the resource selection window;
a range ([n-T0, n-$T_{proc,0}$]) between a starting position of an optional resource sensing window and an ending position of the optional resource sensing window;
a range ([n-T0+100, n- $T_{proc,0}$]) starting backward from a starting position of an optional resource sensing window for a preset time to an ending position of the optional resource sensing window;
a range ([n-T0, n]) between a starting position of the resource sensing window and a resource selection trigger moment;
a range ([n-T0+100, n]) starting backward at a preset time from a starting position of the resource sensing window to a resource selection trigger moment;
a range between an optional starting position of the resource sensing window and a resource selection trigger moment;
a range starting backward from an optional starting position of the resource sensing window for a preset time to a resource selection trigger moment;
a range between an ending position of the resource sensing window and a resource selection trigger moment;
a range starting backward from an ending position of the resource sensing window for a preset time to a resource selection trigger moment;

a range between an optional ending position of the resource sensing window and a resource selection trigger moment;
a range starting backward from an optional ending position of the resource sensing window for a preset time to a resource selection trigger moment;
a range ([n+T1-T0, n+T1]) starting forward from a starting position of the resource selection window for a time length T0 to the starting position of the resource selection window; or
a range ([n+T1-T0+100, n+T1]) starting forward from a starting position of the resource selection window for a time length T0 and then backward for a preset time to the starting position of the resource selection window.

The part of positions is at least one of the following:

first N positions;
last N positions;
first N positions after N-T0+100; or
positions indicated by a bitmap bitmap.

N is an actual quantity of the first resource sensing windows, or a predefined or pre-configured or configured value, or a value determined according to configuration information (for example, obtained according to bitmap indication). Pre-configuration or configuration may be configured or pre-configured by a network, or may further be pre-configured or configured by a terminal. Configuration specifically refers to high-layer signaling configuration, for example, it may be configured/indicated by RRC signaling, MAC CE signaling, SCI signaling, PC5-RRC signaling, SCI, feedback information, PSFCH, and the like.
Continuing the foregoing example, the method according to the embodiments of this application further includes:

performing resource exclusion with a first periodicity value or a first step size as a periodicity value according to at least one of a sensing result in the first resource sensing window or a sensing result in the second resource sensing window, where the first periodicity value is a periodicity value carried in sidelink control information received by the terminal in a corresponding resource sensing window; and the first step size is a step size corresponding to the periodicity value carried in the sidelink control information received by the terminal in the corresponding resource sensing window.

A value of a quantity of excluded resources is Q; where Q is one of the following:

Q is equal to 1;
Q is equal to ceil (step size P in time/periodicity value T), where the ceil is a rounding-up operation, and the periodicity value T is not 0;
Q is equal to floor (step size P in time/periodicity value T), where the floor is a rounding-down operation, and the periodicity value T is not 0, that is, only resources within one step size are excluded; or
Q is equal to round (step size P in time/periodicity value T), where the round is a rounding operation, the periodicity value T is not 0, and
the step size P in time is a sensing step size corresponding to the periodicity value T. The step size P in time may be a corresponding minimum sensing step size/maximum sensing step size/average sensing step size in the resource pool.

It needs to be noted that, the Q resources excluded above may be continuous resources or discontinuous resources. This is not specifically limited herein.
A starting moment of the resource exclusion includes:

a moment when the sidelink control information is received; and
a starting moment of the resource selection window of the terminal.

In summary, in the embodiments of this application, a first resource sensing window is obtained through at least one step size P in time, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.
In order to more clearly describe the method for obtaining a sensing window provided in the embodiments of this application, the following describes with reference to several examples.

Example 2

It is predefined that a step size value P=100 when there is a periodicity value of 100*k in a periodicity value configured in a resource pool. If there is a periodicity value belonging to [1: 99], a least common multiple is taken according to a quantized value of the periodicity value, and is another step size value.

If a resource pool 1 (RP1) is configured to support periodic reservation and is configured with 12 periodicity values, which are respectively [0, 20, 40, 80, 100, 200, 300, 400, 500, 700, 800, 1000]. In configuration of the resource pool, if there is configuration with periodicity values of 100, 200, 300, 400, 500, 700, 800 and 1000, one value of the step size P in time is 100. There is configuration with periodicity values of 20, 40 and 80, a least common multiple corresponding to the periodicity value is 80, and another value of the step size P in time is 80.

If partial sensing is supported in the resource pool, when the terminal performs partial sensing in the resource pool, a position of a resource sensing window is obtained by using a step size P1=80 and a step size P2=100.

Example 3

It is predefined that a terminal obtains a sensing step size according to a quantization result of a configuration periodicity value in a resource pool. It is predefined that quantization granularity is 10 ms, and a quantization method is rounded to obtain a quantized value. It is predefined that when there is a periodicity value of 100*k, a step size value P=100. If there is a periodicity value belonging to [1: 99], a least common multiple is taken according to a quantized value of the periodicity value, and is another step size value.

If a resource pool 1 (RP1) is configured to support periodic reservation and is configured with 12 periodicity values, which are respectively [0, 21, 43, 79, 100, 200, 300, 400, 500, 700, 800, 1000]. In configuration of the resource pool, if there is configuration with periodicity values of 100, 200, 300, 400, 500, 700, 800 and 1000, one value of the step size P in time is 100. If there is configuration with periodicity values of 21, 43, 79, quantized values are determined to be 20, 40, and 80 according to a predefined quantization rule. If a least common multiple corresponding to the periodicity value is 80, another value of the step size P in time is 80.

If a terminal in the resource pool supports partial sensing, the terminal obtains a position of a resource sensing window by using a step size P1=80 and a step size P2=100.

Example 4

It is predefined that if there is a non-zero periodicity value configured in a resource pool less than a periodicity value threshold configured in a high layer, a terminal uses a second resource sensing window to sense a resource in the resource pool. Otherwise, the terminal obtains a step size P in time according to a periodicity value configured in the resource pool, and determines a resource sensing window according to the step size P in time to perform resource sensing.

If a resource pool 1 (RP1) is configured to support periodic reservation and is configured with 12 periodicity values, which are respectively [0, 20, 40, 80, 100, 200, 300, 400, 500, 700, 800, 1000]. The periodicity value threshold configured in the high layer Tthreshold = 30.

In the resource pool, there is a non-zero periodicity value 20 < a periodicity value threshold 30, so in the resource pool, the terminal uses a dynamic resource sensing window to sense.

It needs to be noted that, the method for obtaining a sensing window provided in the embodiments of this application may be performed by an apparatus for obtaining a sensing window, or a control module configured to perform the method for obtaining a sensing window in the apparatus for obtaining a sensing window. In the embodiments of this application, an example in which the method for obtaining a sensing window is performed by the apparatus for obtaining a sensing window is used for describing the apparatus for obtaining a sensing window provided in the embodiments of this application.

As shown in FIG. 3, the embodiments of this application further provide an apparatus 300 for obtaining a sensing window, applied to a terminal, the apparatus including at least one of the following:

a first obtaining module 301, configured to obtain a first resource sensing window according to at least one step size P in time; or
a second obtaining module 302, configured to obtain a second resource sensing window according to a resource selection window.

As an optional embodiment, the apparatus further includes at least one of the following:

a first determining module, configured to determine the step size P in time according to a periodicity value configured in a resource pool;
a second determining module, configured to determine the step size P in time according to a periodicity value configured by a terminal;
a third determining module, configured to determine the step size P in time according to a periodicity value of sidelink discontinuous reception DRX; or
a fourth determining module, configured to determine the step size P in time according to predefinition, or pre-configuration, or configuration.

As an optional embodiment, a value of the step size P in time is less than or equal to a first value; where the first value is a predefined value, or a pre-configured value, or a configured value, or a value determined according to a terminal capability, or a value determined according to quality of service.

As an optional embodiment, the first value is a value corresponding to a configuration parameter of the resource pool, or a value corresponding to a configuration parameter of the terminal, or a value corresponding to a configuration parameter of a logical channel; or a value corresponding to a configuration parameter of a logical channel group.

As an optional embodiment, the first determining module includes at least one of the following:

a first determining submodule, configured to determine the step size P in time according to a least common multiple of some or all the periodicity values configured in the resource pool;
a second determining submodule, configured to determine the step size P in time according to a greatest common divisor of some or all the periodicity values configured in the resource pool; or
a third determining submodule, configured to determine the step size P in time corresponding to the periodicity value configured in the resource pool according to a step size value corresponding to a predefined or pre-configured or configured periodicity value range.

As an optional embodiment, if there are M1 periodicity values meeting a first rule in the periodicity values configured in the resource pool, where M1 is a predefined or pre-configured or configured value. The first determining module includes at least one of the following:

a fourth determining submodule, configured to determine that the step size P in time includes 100;
a fifth determining submodule, configured to determine that the step size P in time includes a greatest common divisor of some or all the periodicity values meeting the first rule; or
a sixth determining submodule, configured to determine that the step size P in time includes a least common multiple of some or all the periodicity values meeting the first rule.

As an optional embodiment, the periodicity values meeting the first rule include at least one of the following:

periodicity values corresponding to multiples of 100; or
periodicity values corresponding to multiples of 10.

As an optional embodiment, if there are M2 periodicity values meeting a second rule in the periodicity value configured in the resource pool, where M2 is a predefined or pre-configured or configured value. The first determining module includes at least one of the following:

a seventh determining submodule, configured to determine that the step size P in time includes a least common multiple of some or all the periodicity values meeting the second rule;
an eighth determining submodule, configured to determine that the step size P in time includes a greatest common divisor of some or all the periodicity values meeting the second rule;
a ninth determining submodule, configured to determine that the step size P in time includes a least common multiple of quantized values of some or all the periodicity values meeting the second rule; or
a tenth determining submodule, configured to determine that the step size P in time includes a greatest common divisor of quantized values of some or all the periodicity values meeting the second rule.

As an optional embodiment, the periodicity values meeting the second rule include at least one of the following:

periodicity values less than 100; or
periodicity values that are not a multiple of 10.

As an optional embodiment, a quantization rule of the quantized values of some or all the periodicity values includes at least one of the following:

rounding up;
rounding down;
rounding; or
a predefined or pre-configured or configured rule.

As an optional embodiment, values of the step sizes P are equal to some or all values of non-zero periodicity values in the resource pool.

As an optional embodiment, the second determining module includes:
an eleventh determining submodule, configured to determine that the step size P in time is equal to the periodicity value configured by the terminal.

As an optional embodiment, the third determining module includes:
a twelfth determining submodule, configured to determine that the step size P in time is equal to the periodicity value of the sidelink DRX.

As an optional embodiment, the apparatus further includes at least one of the following:

a fifth determining module, configured to determine a quantity of the first resource sensing windows; or
a sixth determining module, configured to determine a position of the first resource sensing window.

As an optional embodiment, the quantity of the first resource sensing windows includes an optional quantity of the first resource sensing windows, where the optional quantity of the first resource sensing windows is related to at least one of the following parameters:

a predefined or pre-configured or configured quantity.
a time length T1 between a starting position of the resource selection window and a resource selection trigger moment;
a time length $T1_{min}$ between an optional starting position of the resource selection window and a resource selection trigger moment;
a time length T2 between an ending position of the resource selection window and a resource selection trigger moment n;
a time length $T2_{max}$ between an optional starting position of the resource selection window and a resource selection trigger moment;
a time length T0 between a starting position of an optional resource sensing window and a resource selection trigger moment;

predefined or pre-configured first processing time $T_{proc,0}^{SL}$;

predefined or pre-configured second processing time $T_{proc,1}^{SL}$; or

the step size P in time.

As an optional embodiment, the optional quantity of the first resource sensing windows includes at least one of the following:

$$(T1+T0)/P;$$

$$(T1_{min}+T0)/P;$$

$$(T2+T0)/P$$

$$(T2_{max}+T0)/P$$

$$T0/P;$$

$$(T0\text{-}T^{SL}_{proc,0})/P;$$

$$(T0\text{+}T^{SL}_{proc,1} - 100)/P;$$

$$(T1\text{+}T0\text{-}100)/P;$$

$$(T1_{min}\text{+}T0\text{-}100)/P;$$

$$(T2\text{+}T0\text{-}100)/P$$

$$(T2_{max}\text{+}T0\text{-}100)/P$$

$$(T0\text{-}100)/P;$$

$$(T0\text{-}T^{SL}_{proc,0} - 100)/P;$$

$$(T0\text{+}T^{SL}_{proc,1} - 100)/P;$$

or

a predefined or pre-configured or configured quantity.

As an optional embodiment, the sixth determining submodule includes:

a twelfth determining submodule, configured to determine the position of the first resource sensing window as: some or all positions meeting Y-j*P within a preset range, where Y is a resource in a resource selection window of the terminal, j is a value obtained according to a predefined or pre-configured or configured parameter, and P is the step size.

The preset range includes at least one of the following:

a range between a starting position of an optional resource sensing window and a starting position of the resource selection window;

a range starting backward from a starting position of an optional resource sensing window for a preset time to a starting position of the resource selection window;

a range between a starting position of an optional resource sensing window and an ending position of the optional resource sensing window;

a range starting backward from a starting position of an optional resource sensing window for a preset time to an ending position of the optional resource sensing window;

a range between a starting position of the resource sensing window and a resource selection trigger moment;

a range starting backward from a starting position of the resource sensing window for a preset time to a resource selection trigger moment;

a range between an optional starting position of the resource sensing window and a resource selection trigger moment;

a range starting backward from an optional starting position of the resource sensing window for a preset time to a resource selection trigger moment;

a range between an ending position of the resource sensing window and a resource selection trigger moment;

a range starting backward from an ending position of the resource sensing window for a preset time to a resource selection trigger moment;

a range between an optional ending position of the resource sensing window and a resource selection trigger moment;

a range starting backward from an optional ending position of the resource sensing window for a preset time to a resource selection trigger moment;

a range starting forward from a starting position of the resource selection window for a time length T0 to the starting position of the resource selection window; or

a range starting forward from a starting position of the resource selection window for a time length T0 and then backward for a preset time to the starting position of the resource selection window.

As an optional embodiment, the part of positions is at least one of the following:

first N positions;
last N positions;
first N positions after N-T0+100; or
positions indicated by a bitmap bitmap,
where N is an actual quantity of the first resource sensing windows, N is a predefined or pre-configured or configured value, or N is a value determined according to configuration information.

As an optional embodiment, the apparatus further includes:

an exclusion module, configured to perform resource exclusion with a first periodicity value or a first step size as a periodicity value according to at least one of a sensing result in the first resource sensing window or a sensing result in the second resource sensing window,
where the first periodicity value is a periodicity value carried in sidelink control information received by the terminal in a corresponding resource sensing window; and the first step size is a step size corresponding to the periodicity value carried in the sidelink control information received by the terminal in the corresponding resource sensing window.

As an optional embodiment, a value of a quantity of excluded resources is Q; where Q is one of the following:

Q is equal to 1;
Q is equal to ceil (step size P in time/periodicity value T), where the ceil is a rounding-up operation, and the periodicity value T is not 0;
Q is equal to floor (step size P in time/periodicity value T), where the floor is a rounding-down operation, and the periodicity value T is not 0; or
Q is equal to round (step size P in time/periodicity value T), where the round is a rounding operation, the periodicity value T is not 0, and
the step size P in time is a sensing step size corresponding to the periodicity value T.

As an optional embodiment, a starting moment of the resource exclusion includes:

a moment when the sidelink control information is received; and
a starting moment of the resource selection window of the terminal.

As an optional embodiment, in a case that a first condition is met, the second resource sensing window is obtained, otherwise, the first resource sensing window is obtained, where the first condition includes at least one of the following:

a periodicity value configured by the terminal is less than a first periodicity value threshold;
a periodicity value configured in the resource pool includes one or more non-zero periodicity values less than a second periodicity value threshold;
a periodicity value configured in the resource pool is not enabled; or
a periodicity value configured by the terminal is 0.

As an optional embodiment, at least one of the first periodicity value threshold and the second periodicity value threshold is at least one of the following:

a predefined threshold;
a pre-configured threshold;
a configured threshold; or
a threshold related to the periodicity value configured in the resource pool.

In the embodiments of this application, a first resource sensing window is obtained through at least one step size P in time, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.

It needs to be noted that, if the apparatus for obtaining a sensing window provided in the embodiments of this application is an apparatus capable of performing the method for obtaining a sensing window, all embodiments of the method for obtaining a sensing window are applicable to the apparatus and can achieve the same or similar beneficial effects.

The apparatus for obtaining a sensing window in the embodiments of this application may be an apparatus, or a component, an integrated circuit, or a chip in a terminal. The apparatus may be a mobile electronic device or a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), an automated teller machine, or a self-service machine. This is not specifically limited in the embodiments of this application.

The apparatus for obtaining a sensing window in the embodiments of this application may be an apparatus with an operating system. The operating system may be an Android (Android) operating system, or may be an ios operating system or other possible operating systems, which is not specifically limited in the embodiments of this application.

The apparatus for obtaining a sensing window provided in this embodiment of this application can implement the processes implemented in the method embodiments of FIG. 1 to FIG. 2. To avoid repetition, details are not described herein again.

Optionally, as shown in FIG. 4, the embodiments of this application further provide a terminal 400. The terminal 400 includes a processor 401, a memory 402, and a program or an instruction stored in the memory 402 and executable on the processor 401. When the program or instruction is executed by the processor 401, processes of the foregoing embodiments of the method for obtaining a sensing window are implemented, and the same technical effect can be achieved. To avoid repetition, details are not described herein again.

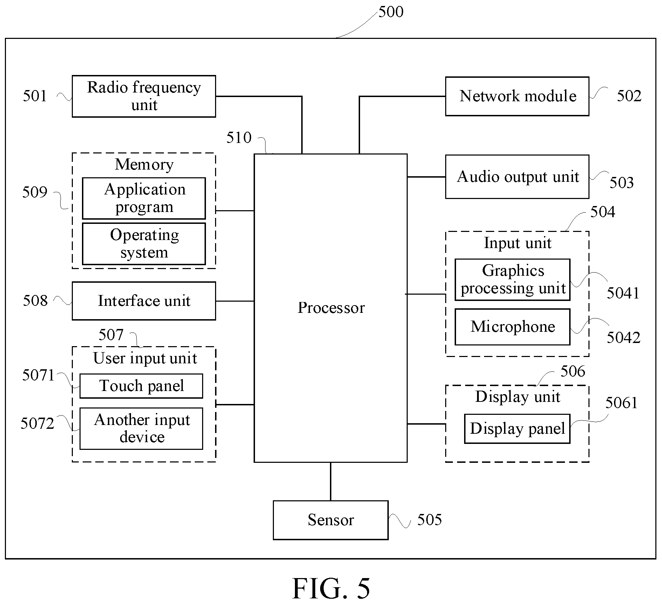

FIG. 5 is a schematic structural diagram of hardware of a terminal implementing an embodiment of this application. The terminal 500 includes, but is not limited to: components such as a radio frequency unit 501, a network module 502, an audio output unit 503, an input unit 504, a sensor 505, a display unit 506, a user input unit 507, an interface unit 508, a memory 509, and a processor 510.

Those skilled in the art may understand that the terminal 500 may further include a power supply (such as a battery) for supplying power to the components. The power supply may be logically connected to the processor 510 by using a power supply management system, thereby implementing functions such as charging, discharging, and power consumption management, by using the power supply management system. A terminal structure shown in FIG. 5 does not constitute a limitation to the terminal, and the terminal may include more or fewer components than those shown in the figure, or some components may be combined, or a different component deployment may be used. Details are not described herein again.

It should be understood that in the embodiments of this application, the input unit 504 may include a graphics processing unit (Graphics Processing Unit, GPU) 5041 and a microphone 5042, and the graphics processing unit 5041 processes image data of a still picture or a video obtained by an image capture apparatus (such as a camera) in a video capture mode or an image capture mode. The display unit 506 may include a display panel 5061. The display panel 5061 may be configured by using a liquid crystal display, an organic light-emitting diode, or the like. The user input unit 507 includes a touch panel 5071 and another input device 5072. The touch panel 5071 is also referred to as a touch screen. The touch panel 5071 may include two parts: a touch detection apparatus and a touch controller. The another input device 5072 may include, but is not limited to, a physical keyboard, a functional key (for example, a volume control key or a switch key), a track ball, a mouse, and a joystick, and details will not be described herein again.

In the embodiments of this application, the radio frequency unit 501 is configured to receive downlink data from a network side device and transmit the downlink data to the processor 510 for processing; and send uplink data to the network side device. Generally, the radio frequency unit 501 includes, but is not limited to, an antenna, at least one amplifier, a transceiver, a coupler, a low noise amplifier, a duplexer, and the like.

The memory 509 may be configured to store a software program or instruction and various data. The memory 509 may mainly include a program or instruction storage area and a data storage area. The program or instruction storage area may store an operating system, an application program or instruction required by at least one function (for example, a sound playback function and an image display function), and the like. In addition, the memory 509 may include a high-speed random access memory and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The memory 509 may include, for example, at least one magnetic disk memory device, a flash memory device, or other non-volatile solid-state memory devices.

Optionally, the processor 510 may include one or more processing units. Optionally, the processor 510 may integrate an application processor and a modem processor, where the application processor mainly processes an operating system, a user interface, an application program or instruction, and the like, and the modem processor mainly processes wireless communication, such as a baseband processor. It may be understood that the modem processor may alternatively not be integrated into the processor 510.

The processor 510 is configured to obtain a first resource sensing window according to at least one step size P in time;

and/or obtain a second resource sensing window according to a resource selection window.

Optionally, the processor 510 is further configured to determine the step size P in time according to a periodicity value configured in the resource pool;

determine the step size P in time according to a periodicity value configured by a terminal;

determine the step size P in time according to a periodicity value of sidelink discontinuous reception DRX; and

determine the step size P in time according to predefinition, or pre-configuration, or configuration.

Optionally, the processor 510 is further configured to obtain the second resource sensing window in a case that a first condition is met, otherwise, to obtain the first resource sensing window, where the first condition includes at least one of the following:

a periodicity value configured by the terminal is less than a first periodicity value threshold;

a periodicity value configured in the resource pool includes one or more non-zero periodicity values less than a second periodicity value threshold;

a periodicity value configured in the resource pool is not enabled; or

a periodicity value configured by the terminal is 0.

In the embodiments of this application, a first resource sensing window is obtained through at least one step size P in time, and/or a second resource sensing window is obtained according to a resource selection window, so that a purpose of balancing power consumption and sensing performance can be achieved, a position of a time domain resource to be sensed by a terminal can be reduced, and a purpose of saving power can also be achieved.

The embodiments of this application further provide a readable storage medium storing therein a program or an instruction. The program or instruction is executed by a processor to implement the processes of the embodiments of the method for obtaining a sensing window, and the same technical effects can be achieved. To avoid repetition, details are not described herein again.

The processor is a processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

The embodiments of this application further provide a chip, including a processor and a communication interface. The communication interface is coupled to the processor, and the processor is configured to run a program or an instruction to implement processes of the embodiments of the method for obtaining a sensing window, and the same technical effect can be achieved. To avoid repetition, details are not described herein again.

It should be noted that, the chip mentioned in the embodiments of this application may also be referred to as a system-level chip, a system chip, a chip system, a system on chip, or the like.

It may be understood that the embodiments described in the disclosure may be implemented by hardware, software, firmware, middleware, microcode, or a combination thereof. For hardware implementation, a module, a unit, a submodule, and a subunit may be implemented in one or more application-specific integrated circuits (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in this application, or a combination of the above.

It needs to be noted that, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by a sentence "including one" does not exclude that there are still other same elements in the process, method, object, or apparatus. Furthermore, it should be noted that a scope of the methods and apparatus in the implementations of this application is not limited to performing the functions in the order shown or discussed, but may also include performing the functions in a substantially simultaneous manner or in the reverse order depending on the functions involved. For example, the methods described may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for obtaining a sensing window, performed by a terminal, **characterized by** the method comprising:

    obtaining (101) a first resource sensing window according to at least one step size P in time; and
    performing resource exclusion with a first periodicity value as a periodicity value according to a sensing result in the first resource sensing window,
    wherein the first periodicity value is a periodicity value carried in sidelink control information received by the terminal in the first resource sensing window.

2. The method according to claim 1, wherein the step size P in time is a subset of periodicity values configured in a resource pool.

3. The method according to claim 1 or 2, wherein a value of the step size P in time is less than or equal to a first value, wherein the first value is a predefined value, or a pre-configured value, or a configured value, or a value determined according to a terminal capability, or a value determined according to quality of service.

4. The method according to claim 1, wherein the method further comprises at least one of the following:

    determining a quantity of the first resource sensing windows; or
    determining positions of the first resource sensing windows.

5. The method according to claim 4, wherein the quantity of the first resource sensing windows comprises an optional quantity of the first resource sensing windows, wherein the optional quantity of the first resource sensing windows is related to a predefined or pre-configured or configured quantity.

6. The method according to claim 5, wherein the optional quantity of the first resource sensing windows comprises at least one of the following:

$$(T1+T0)/P;$$

$$(T1_{min}+T0)/P;$$

$$(T2+T0)/P$$

$$(T2_{max}+T0)/P$$

$$T0/P;$$

$$(T0-T_{proc,0}^{SL})/P;$$

$$(T0+T_{proc,1}^{SL} - 100)/P;$$

$$(T1+T0-100)/P;$$

$$(T1_{min}+T0-100)/P;$$

$$(T2+T0-100)/P;$$

$$(T2_{max}+T0-100)/P;$$

$$(T0-100)/P;$$

$$(T0-T_{proc,0}^{SL} - 100)/P;$$

$$(T0+T_{proc,1}^{SL} - 100)/P;$$

or the predefined or pre-configured or configured quantity.

7. The method according to claim 4, wherein the determining positions of the first resource sensing windows comprises:

determining the positions of the first resource sensing windows as a part of positions meeting Y-j*P within a preset range; wherein Y is a resource in a resource selection window of the terminal, j is a value obtained according to a configured parameter, and P is the step size in time; and
the preset range comprises at least one of the following:

a range between a starting position of an optional resource sensing window and a starting position of the resource selection window; or
a range between a starting position of an optional resource sensing window and an ending position of the optional resource sensing window.

8. The method according to claim 7, wherein the part of positions are last N positions;
wherein N is a value determined according to configuration information.

9. The method according to claim 1, wherein the method further comprises:
in a case that a first condition is met, a second resource sensing window is obtained, otherwise, the first resource sensing window is obtained, wherein the first condition comprises at least one of the following:

a periodicity value configured by the terminal is less than a first periodicity value threshold;
a periodicity value configured in the resource pool comprises one or more non-zero periodicity values less than a second periodicity value threshold;
a periodicity value configured in the resource pool is not enabled; or
a periodicity value configured by the terminal is 0.

10. The method according to claim 1, wherein the obtaining (101) a first resource sensing window according to at least one step size P in time comprises:

obtaining the first resource sensing window according to the at least one step size P and resource selection windows.

11. The method according to claim 1, wherein a value of a quantity of excluded resources is Q; wherein Q is one of the following:

Q is equal to 1;
Q is equal to ceil (step size P in time/periodicity value T), wherein the ceil is a rounding-up operation, and the periodicity value T is not 0;
Q is equal to floor (step size P in time /periodicity value T), wherein the floor is a rounding-down operation, and the periodicity value T is not 0; or
Q is equal to round (step size P in time/periodicity value T), wherein the round is a rounding operation, the periodicity value T is not 0, and
the step size P in time is a sensing step size P in time corresponding to the periodicity value T.

12. The method according to claim 1, wherein a starting moment of the resource exclusion comprises:

a moment when the sidelink control information is received; and
a starting moment of the first resource selection window of the terminal.

13. The method according to claim 2, wherein the subset of periodicity values configured in a resource pool is pre-configured values or configured values.

14. A terminal, comprising a processor, a memory, and a program or an instruction stored on the memory and executable on the processor, the program or instruction, when executed by the processor, implementing steps of the method for obtaining a sensing window according to any one of claims 1 to 13.

15. A readable storage medium, storing a program or an instruction, the program or instruction, when executed by a processor of a terminal, implementing steps of the method for obtaining a sensing window according to any one of claims 1 to 13.

```
                        ┌──────────┐
                        │  Start   │
                        └──────────┘
                              │
              ┌───────────────┴───────────────┐
              ▼                               ▼
   ┌─────────────────────┐        ┌─────────────────────┐
   │ Obtain a second     │        │ Obtain a first      │
   │ resource sensing    │        │ resource sensing    │
   │ window according    │        │ window according    │  ⌇ 101
   │ to a resource       │        │ to at least one     │
   │ selection window    │        │ stride P            │
   └─────────────────────┘        └─────────────────────┘
  102 ⌇        │                               │
              └───────────────┬───────────────┘
                              ▼
                        ┌──────────┐
                        │   End    │
                        └──────────┘
```

## FIG. 1

n-T0        n-$T_{proc, 0}$     n+T1   n+T2     t（ms)

## FIG. 2

```
┌──────────────────────────────────────────────────┐
│      Apparatus for obtaining a sensing window     │
│   ┌──────────────────────────────────────────┐   │
│   │        First obtaining module            │ ⌇─┼── 301
│   └──────────────────────────────────────────┘   │
│                                                    │
│   ┌──────────────────────────────────────────┐   │
│   │        Second obtaining module           │ ⌇─┼── 302
│   └──────────────────────────────────────────┘   │
└──────────────────────────────────────────────────┘
  300 ⌇
```

## FIG. 3

```
                                        ⌐ 400
┌──────────────────────────────────────────────────┐
│                   Terminal                         │
│        ⌐ 401                        ⌐ 402          │
│   ┌──────────┐              ┌──────────────┐      │
│   │ Memory   │ ◄═══════════► │  Processor   │      │
│   └──────────┘              └──────────────┘      │
└──────────────────────────────────────────────────┘
```

## FIG. 4

EP 4 766 013 A2

FIG. 5

21